# EUROPÄISCHE PATENTANMELDUNG

(11) **EP 2 544 405 A1**
(43) Veröffentlichungstag der Anmeldung: **09.01.2013**
(21) Anmeldenummer: 12004695.8
(22) Anmeldetag: 07.05.2012
(51) Int. Cl.: H04L 12/24, H04L 12/40

(54) **Mehrstufiges Verfahren und Einrichtung zum interaktiven Auffinden von Gerätedaten eines Automatisierungssystem**

(30) Priorität: 11.05.2011 DE 102011101146
(71) Anmelder: ABB Technology AG, 8050 Zürich (CH)
(72) Erfinder: Grossmann, Daniel, Dr.-Ing., 69189 Schriesheim (DE)
(74) Vertreter: Marks, Frank

(57) **Zusammenfassung**

Die Erfindung betrifft Verfahren zum mehrstufigen interaktiven Auffinden und Verwerten von Gerätedaten in einem vernetzten Automatisierungssystem, bei dem vom Nutzer von zentraler Stelle aus per Tastatur (8) in einem graphischen Suchfeld (10) einer Eingabemaske (7) eines Monitors (6) einer Informationsbereitstellungseinheit (5) eine Bezeichnung (11) eines im Kommunikationsnetzwerk (3) des Automatisierungssystems vorhandenen Feldgeräts (2a, 2b) eingegeben wird, wobei die Informationsbereitstellungseinheit (5) während der Eingabe der Bezeichnung (11) in das Suchfeld (10) in einer zugeordneten Ergebnisliste (12) passende Trefferbezeichnungen (13) tatsächlich im Automatisierungssystem vorhandener Feldgeräte (2a, 2b) generiert und angezeigt werden, wobei nach Auswahl des gesuchten Feldgeräts (2a) in einem Auswahlschritt bei einem nachfolgenden Verfeinerungsschritt mindestens ein weiteres das ausgewählte Feldgerät (2a) betreffendes ergänzendes Suchkriterium (15) in das Suchfeld (10) oder ein benachbartes Verfeinerungssuchfeld (14) der Eingabemaske (7) eingegeben wird, um nach anschließendem Start der Suche durch den Nutzer die dem ergänzenden Suchkriterium für das gesuchte Feldgerät (2a) entsprechenden Gerätedaten auswählbar anzuzeigen.

## Beschreibung

Die Erfindung betrifft ein Verfahren sowie eine Einrichtung zum mehrstufigen interaktiven Auffinden und Verwerten von Gerätedaten in einem vernetzten Automatisierungssystem, bei dem von einem Nutzer von zentraler Stelle aus per Eingabe in einem grafischen Suchfeld eine Eingabemaske eines Monitors einer Informationsbereitstellungseinheit eine Bezeichnung eines im Kommunikationsnetzwerk des Automatisierungssystems vorhandenen Feldgerätedatums eingegeben wird. Ferner betrifft die Erfindung auch ein dieses Verfahren realisierendes Computerprogrammprodukt.

Das Einsatzgebiet der Erfindung erstreckt sich auf Automatisierungssysteme im Rahmen industrieller Anlagen, beispielsweise der Verfahrenstechnik. Zur Steuerung der Verfahrensabläufe werden Geräte - wie Ventile als Stellglieder, Sensoren und dergleichen - eingesetzt, welche mit einer übergeordneten Steuerung und untereinander per Feldbus kommunizieren. Solche Feldgeräte besitzen zur Busanbindung sowie zur lokalen Datenverarbeitung integrierte Elektronikeinheiten. Bei modernen Automatisierungssystemen, welche sich zur Kommunikation eines Feldbusprotokolls bedienen, werden höhere Stufen der Feldgeräteinformation integriert, um Arbeitsprozesse zu modernisieren, Prozess- und Produktqualität zu verbessern und die Verfügbarkeit zu maximieren. Konfigurations-, Parametrierungs- und Diagnosefunktionen des Steuerungssystems beziehen sich insoweit ebenfalls auf die Feldgeräte. Der Begriff Feldgerät bezieht sich im Rahmen der vorliegenden Anmeldung damit auf viele Aktuatoren, Sensoren, Analysegeräte und Niederspannungsgeräte, welche sich über einen Busanschluss in ein Automatisierungssystem integrieren lassen. Durch die Verwendung intelligenter Feldgeräte und unter Nutzung von modernen Feldbusprotokollen lassen sich eine Vielzahl von Funktionen im System implementieren, wie Bedienfunktionen, Inbetriebnahmefunktionen, Diagnosefunktionen, Wartungsfunktionen, Optimierungsfunktionen, Alarmverarbeitungsfunktionen und Lebensdauerüberwachungsfunktionen.

Hieraus resultiert der Trend, dass Feldgeräte immer Komplexer und intelligenter in Aufbau bzw. Funktionsumfang werden. Dies kommt zum Ausdruck durch eine ansteigende Anzahl von Parametern der Feldgeräte. Diese Parameter treten in einer großen Vielfalt von Gerätedaten auf, wie insbesondere in den Gerätestammdaten oder in der Gerätebeschreibung.

Aus dieser Situation ergibt sich für den Nutzer vermehrt die Problemstellung, dass die Menge solcher und ähnlicher Gerätedaten mit der Größe und Komplexität des Automatisierungssystems ansteigt und unübersichtlich werden kann. Im Interesse der Betriebssicherheit ist es erforderlich, dass Gerätedaten vollständig und aktuell für den Nutzer stets abrufbar zur Verfügung stehen. Im Falle von Gerätebeschreibungen werden diese gewöhnlich in Form einer Datenbankdatei des Feldgerätes bereitgestellt. Für PROFIBUS-Geräte werden vom Gerätehersteller diese Gerätedatenbanken u.a. als sogenannte GSD oder EDD-Dateien geliefert. Es ist jedoch auch denkbar, dass Gerätedaten an zentraler Stelle in einer Gerätemanagement-Datenbank abgespeichert hinterlegt werden, welche für jedes im Automatisierungssystem vorhandene Feldgerät Informationen über dessen technische Kenndaten, Herstellerdaten, Konfigurationsdaten und Bedienungsanleitungen enthält.

Durch diese Struktur ist es für den Nutzer vermehrt schwierig und zeitaufwändig, speziell ihn interessierende aktuelle Gerätedaten im Automatisierungssystem überhaupt aufzufinden und diese dann bearbeiten oder anders verwenden zu können. Wird hierfür eine softwaregesteuerte Suchfunktion genutzt, so setzt eine solche Suche die genaue Kenntnis der Syntax von Gerätekennungen für die eindeutige Identifizierung eines Feldgeräts des Automatisierungssystems voraus. Selbst wenn ein Suchergebnis erzielt worden ist, so ist es nicht sicher, dass das erzielte Suchergebnis sich tatsächlich auf das interessierende Feldgerät bezieht.

Es ist daher die Aufgabe der vorliegenden Erfindung, ein zuverlässig funktionierendes Mittel zum Auffinden und Verwerten von Gerätedaten in einem vernetzten Automatisierungssystem zu schaffen, das in der Lage ist, Gerätedaten einer Vielzahl von Feldgeräten einem eindeutigen und richtigen Suchergebnis zuzuführen, über welches der Nutzer unabhängig von dem tatsächlichen Speicherort der Gerätedaten einen direkten Zugriff auf den Inhalt zur Anzeige zur Bearbeitung oder dergleichen erhält.

Die Aufgabe wird ausgehend von einem Verfahren gemäß dem Oberbegriff von Anspruch 1 in Verbindung mit dessen kennzeichnenden Merkmalen gelöst. Einrichtungstechnisch wird die Aufgabe durch Anspruch 6 gelöst. Die jeweils rückbezogenen abhängigen Ansprüche geben vorteilhafte Weiterbildungen der Erfindung wieder.

Die Erfindung schließt die technische Lehre ein, dass durch eine Informationsbereitstellungseinheit des Automatisierungssystems während der Eingabe der Bezeichnung in das Suchfeld in einer diesem zugeordneten Ergebnisliste passende Trefferbezeichnungen tatsächlich im Automatisierungssystem vorhandener Feldgeräte generiert und angezeigt werden, wobei nach Auswahl des gesuchten Feldgeräts aus der Ergebnisliste in einem Auswahlschritt im Zuge eines nachfolgenden Verfeinerungsschritts mindestens ein weiteres das ausgewählte Feldgeräte betreffendes ergänzendes Suchkriterium in das Suchfeld oder ein benachbartes Verfeinerungssuchfeld der Eingabemaske eingegeben wird, um nach anschließendem Start der Suche durch Aktion des Nutzers, vorzugsweise aus einer Gerätemanagement-Datenbank, die dem ergänzenden Suchkriterium für das gesuchte Feldgerät entsprechenden Gerätdaten auswählbar anzuzeigen.

Zur auswählbaren Anzeige der Gerätedaten in Ergebnis diese speziellen mehrstufigen interaktiven Auffindverfahrens kann die Informationsbereitstellungseinheit entweder in einzelnen Feldgeräten lokal hinterlegte Gerätedaten analysieren oder auch auf eine zentrale Gerätemanagement-Datenbank zurückgreifen, in welcher alle Gerätedaten des Automatisierungssystems gesammelt sind. Die erfindungsgemäße Lösung ermöglicht das Auffinden der gesuchten Gerätedaten in komplexen Automatisierungssystemen auf eine einfache und intuitive Weise, ohne dass der Nutzer wissen muss an welchem Ort die gesuchten Gerätedaten gespeichert sind.

Die hierfür erforderlicherweise einzugebende Bezeichnung des Geräts ist vorzugsweise die vom Hersteller vorgegebene Gerätekennung, welche eine Zahlen-Buchstaben-Folge sein kann. Jede Bezeichnung ist hierbei eindeutig festgelegt, um als eindeutiges Suchkriterium gelten zu können. Das zusätzlich und erst im weiteren Auswahlschritt einzugebende ergänzende Suchkriterium kennzeichnet auf ähnliche Weise eine das ausgewählte Gerät betreffende Spezifikation des Geräts, beispielsweise Geräteparameter, Handbuch des Geräts, Prozessdaten am Gerät.

Zur Eingabe des ergänzenden Suchkriteriums in das Suchfeld werden vorzugsweise in einer zugeordneten weiteren Ergebnisliste passende Trefferbezeichnungen tatsächlich im Automatisierungssystem vorhandener und dem ergänzenden Suchkriterium entsprechender Spezifizierungen generiert und angezeigt. Hierdurch wird das Auffinden der gesuchten Gerätedaten weiter vereinfacht.

Zur besseren Handhabbarkeit des mehrstufigen interaktiven Auffindverfahrens wird vorgeschlagen, dass die ausgewählte Trefferbezeichnung im separaten Verfeinerungssuchfeld angezeigt wird, und dass das ergänzende Suchkriterium in Form eines Suffixes hierzu eingegeben wird. Dabei kann auch hier in Analogie zum vorangegangenen Auswahlschritt das ergänzende Suchkriterium in einer dem Verfeinerungssuchfeld zugeordneten Ergebnisliste im Sinne einer Vorauswahl angezeigt werden. Vorzugsweise sollte die dem ergänzenden Suchkriterium für das gesuchte Feldgerät entsprechenden Gerätedaten schließlich in Form eines mit den Gerätedaten durch einen Link verknüpften Ereignisdarstellungsfeld angezeigt werden. Hierdurch erhält der Nutzer die Möglichkeit, vor der Ergebnisdarstellung direkt auf das Suchergebnis, beispielsweise das als Datei hinterlegte Servicehandbuch des Feldgeräts, zugreifen, um dessen Inhalt zu verwerten.

Für eine erleichterte optische Wahrnehmung des Suchergebnisses wird gemäß einer weiteren die Erfindung verbessernden Maßnahme vorgeschlagen, dass den im Ereignisdarstellungsfeld angezeigten Gerätedaten jeweils Piktogramme zur visuellen Identifizierung zugeordnet sind. Diese Piktogramme können beispielsweise den Gerätetyp des Feldgeräts darstellen, also ein Sensorsymbol, Ventilsymbol und dergleichen sein. Daneben ist es auch denkbar, dass Piktogramme zur visuellen Identifizierung des Dateiformats der Gerätedaten dargestellt werden, also pdf-Datei oder Parametereingabemaske und dergleichen.

Durch Anwählen des Suchergebnisses erhält der Nutzer somit die Möglichkeit, beispielsweise direkt von der Ergebnisdarstellung auf das Nutzer-Interface des Feldgeräts durchzugreifen, also dieses zu öffnen, um beispielsweise Geräteparameter ändern zu können.

Im Rahmen des busgesteuerten Automatisierungssystems lässt sich das erfindungsgemäße mehrstufige Verfahren zum interaktiven Auffinden der Gerätedaten vorzugsweise in Form eines Computerprogrammprodukts realisieren, wobei sich die Routine zum Auffinden der gewünschten Gerätedaten durch entsprechende in einer Software hinterlegte Steuerungsbefehle umsetzen lassen. Gegenstand der erfindungsgemäßen Lösung ist nicht allein das Auffinden zuvor im System hinterlegter, gegebenenfalls in einer zentralen Gerätemanagement-Datenbank abgespeicherter Datensätze, sondern darüber hinaus auch die Realisierung eines direkten Zugriffs auf eine Geräteparametrierung und dergleichen auf dem Feldgerät über das industrielle Kommunikationsprotokoll, und zwar direkt ausgehend vom Suchergebnis. Weitere Verfahrenszwischenschritte oder gar die Nutzung einer anderen speziell für die Parametrierung vorgesehenen Systemeinheit kann hierdurch entfallen, was die Arbeitsprozesse im Automatisierungssystem schneller und zuverlässiger macht.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1: eine schematische Darstellung eines vernetzten Automatisierungssystems mit einer Informationsbereitstellungseinheit zum mehrstufigen interaktiven Auffinden und Verwerten von Gerätedaten, und
- Figur 2: eine schematische Darstellung einer Eingabemaske der Informationsbereitstellungseinheit nach Figur 1.

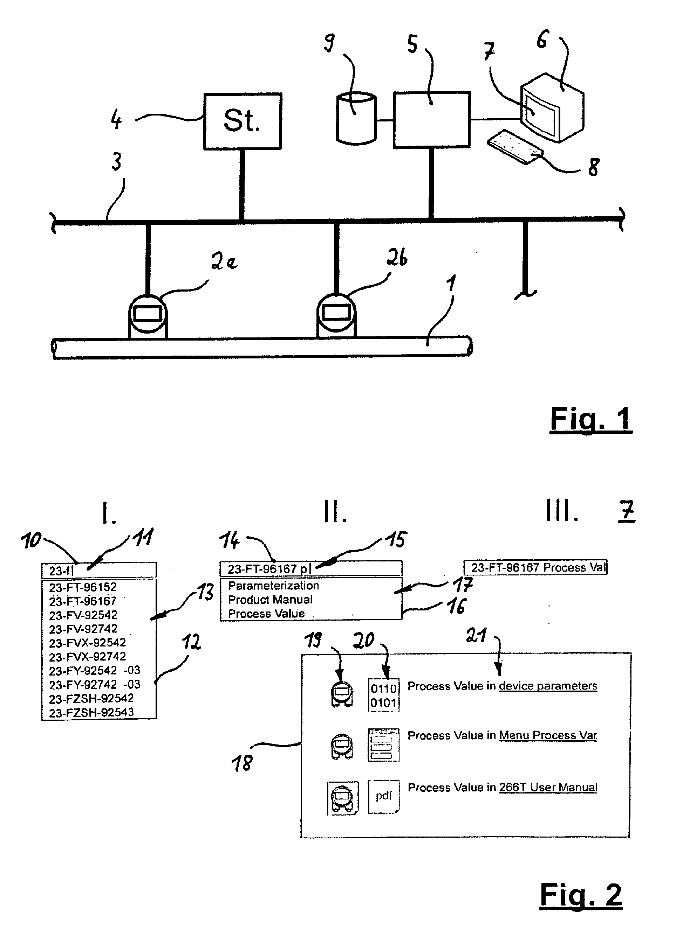

Gemäß Figur 1 umfasst ein Automatisierungssystem einer verfahrenstechnischen Anlage mehrere an einer exemplarischen Rohrleitung 1 angeordnete Feldgeräte 2a und 2b, welche hier beispielhaft Durchflussmessgeräte darstellen, die über eine integrierte Busschnittstelle mit einem Kommunikationsnetzwerk 3 in Verbindung stehen, um insbesondere die ermittelten Messdaten über das Kommunikationsnetzwerk 3 nach Maßgabe des Busprotokolls an eine zentrale Steuereinheit 4 weiter zu melden. Ferner umfassen die Feldgeräte 2a und 2b auch andere Funktionen, wie Selbsttestfunktionen, Lebensdauerzählfunktionen und dergleichen, welche ebenfalls über das Kommunikationsnetzwerk 3 überwachbar sind.

Neben der zentralen Steuereinheit 4 ist auch eine spezielle Informationsbereitstellungseinheit 5 an das Kommunikationsnetzwerk 3 des Automatisierungssystems angeschlossen. Die Informationsbereitstellungseinheit 5 dient einem mehrstufig interaktivem Auffinden von Gerätedaten aller im Automatisierungssystem vorhandener Feldgeräte 2a, 2b etc. und ermöglicht darüber hinaus einen direkten Zugriff auf die Kommunikationsschnittstellen zumindest einzelner Feldgeräte 2a, 2b. Hierfür umfasst die Informationsbereitstellungseinheit 5 einen Monitor 6 mit einer speziellen - nachfolgend eingehend erläuterten - Eingabemaske 7. Der Nutzer kann über eine zugeordnete Tastatur 8 mit Hilfe der Eingabemaske 7 durch eine interaktive Softwareanwendung die vorstehend genannte Funktion der Informationsbereitstellungseinheit 5 durchgeführt werden. Zum Auffinden von Gerätedaten ist die Informationsbereitstellungseinheit 5 in diesem Ausführungsbeispiel an eine Gerätemanagement-Datenbank 9 angeschlossen. In der Gerätemanagement-Datenbank 9 sind für jedes im Automatisierungssystem vorhandene Feldgerät 2a, 2b etc. Informationen über deren jeweilige technische Kenndaten, Herstellerdaten, Konfigurationsdaten sowie Bedienungsanleitungen enthalten.

Nach Figur 2 erfolgt das mehrstufige interaktive Auffinden gewünschter Gerätedaten über die Eingabemaske 7 derart, dass im Schritt I. in einem grafischen Suchfeld 10 durch den Nutzer über die - nicht weiter dargestellte - Tastatur 8 begonnen wird, die Bezeichnung 11 des aufzufindenden Feldgeräts 2a einzugeben. Während der Eingabe der Bezeichnung 11 in das Suchfeld 10 werden in einer zugeordneten Ergebnisliste 12 passende Trefferbezeichnungen 13 tatsächlich im Automatisierungssystem vorhandener Feldgeräte 2a, 2b, etc. über die - hier nicht weiter dargestellte - Informationsbereitstellungseinheit 5 unter Rückgriff auf die Gerätemanagement-Datenbank 9 generiert und angezeigt. Hierdurch wird dem Nutzer eine erleichterte Auswahl des gesuchten Feldgeräts 2a ermöglicht.

In einem weiteren Schritt II. wird das zuvor im Suchfeld 10 ausgewählte Feldgerät 2a hinsichtlich seiner Bezeichnung dargestellt und der Nutzer kann als Suffix im Verfeinerungsnutzfeld 14 der Eingabemaske 7 beginnen, ein ergänzendes Suchkriterium 15 einzugeben. Das ergänzende Suchkriterium 15 beginnt hier mit dem Buchstaben "P" und in einer dem Verfeinerungsfeld 14 zugeordneten eigenen Ergebnisliste 16 wird eine Vorauswahl passender Trefferbezeichnungen 17 angeboten. Die Ergebnisliste 16 enthält Trefferbezeichnungen 17 von tatsächlich im Automatisierungssystem vorhandener und dem ergänzenden Suchkriterium entsprechender Spezifizierungen, hier die zum Feldgerät 2a zugehörige Parametrierung, das Benutzerhandbuch sowie die Prozesswerte am Feldgerät 2a.

Wird die Suche im Schritt III. durch Tastenbetätigung des Nutzers gestartet, so wählt die Informationsbereitstellungseinheit durch Rückgriff auf die Gerätemanagement-Datenbank 9 die der Bezeichnung 11 des Feldgeräts 2a inklusive dem ergänzenden Suchkriterium 15 entsprechenden Gerätedaten für das Feldgerät 2a. Diese Gerätedaten 21 werden in einem Ergebnisdarstellungsfeld 18 listenartig angezeigt und jedem Eintrag ist ein Piktogramm 19 und 20 (exemplarisch) zugeordnet. Dabei bezeichnet das Piktogramm 19 den Gerätetyp des Feldgeräts 2a, nämlich einen Temperatursensor und das Piktogramm 20 das Dateiformat der jeweiligen Gerätedaten 21, nämlich pdf-Dokument, Eingabemaske und dergleichen.

Die im Ergebnisdarstellungsfeld 18 listenartig eingetragenen Gerätedaten 21 können anschließend vom Nutzer angewählt werden, um einen direkten Durchgriff auf die Prozesswerte bei den Geräteparametern zu haben oder in einem Editierungsmenü die Variablen zu ändern oder Informationen hinsichtlich der Prozesswerte in einem Benutzerhandbuch zu erlangen.

Die Erfindung ist nicht beschränkt auf das vorstehend beschriebene bevorzugte Ausführungsbeispiel, es sind vielmehr auf Abwandlungen hiervon denkbar, welche vom Schutzbereich der nachfolgenden Ansprüche mit umfassen. So ist es beispielsweise auch möglich, andere Feldgeräte hinsichtlich ihrer Gerätedaten durch das erfindungsgemäße Verfahren sowohl zügig aufzufinden, als auch zu lesen oder zu bearbeiten.

Um ein zügiges Auffinden von sich im Verbund des Automatisierungssystems befindlichen Feldgeräten weiter zu vereinfachen, können die Suchfelder der Eingabemaske auch mit weiteren Ergänzungsfunktionen ausgestattet sein. So ist es beispielsweise möglich, eine suchbare Historie der in der Vergangenheit vom Benutzer ausgewählten Trefferbezeichnungen oder eingegebenen Suchbegriffe zu erstellen, um einen schnelleren Zugriff auf sich oft wiederholende Eingaben zu ermöglichen. Diese Historie kann je nach Login-Kennung des Benutzers auch personalisiert werden. Hierdurch kann der Nutzer entweder Einträge aus einer Historienliste für die Eingabe in das Suchfeld nutzen oder es werden - wie vorstehend vorgeschlagen - mit fortschreitender Eingabe eines Suchbegriffs in ein Suchfeld passende Treffer aus der Historienliste zur Auswahl bereit gestellt. Dabei kann die Historie über verschiedene Eintragungskategorien gefiltert werden.

Darüber hinaus kann dem Benutzer auch die Möglichkeit gegeben werden, oft verwendete Suchbegriffe in einer Favoritenliste abgespeichert zu hinterlegen, um einen schnelleren Zugriff hierauf zu erhalten, ohne dass diese Suchbegriffe über eine Tastatur ständig wiederholt eingegeben werden müssen. Diese und andere Funktionserweiterungen für die Eingabemaske können in geeigneter Weise auf dem Monitor zu Anzeige gebracht werden, wobei der Nutzer die Möglichkeit erhält, die Art der graphischen Darstellung und die Anordnung der Ansichten selbst zu gestalten.

### Bezugszeichenliste

- 1: Rohrleitung
- 2: Feldgerät
- 3: Kommunikationsnetzwerk
- 4: Steuereinheit
- 5: Informationsbereitstellungseinheit
- 6: Monitor
- 7: Eingabemaske
- 8: Tastatur
- 9: Gerätemanagement-Datenbank
- 10: Suchfeld
- 11: Bezeichnung
- 12, 16: Ergebnisliste
- 13, 17: Trefferbezeichnung
- 14: Verfeinerungssuchfeld
- 15: Ergänzendes Suchkriterium
- 18: Ergebnisdarstellungsfeld
- 19,20: Piktogramm
- 21: Gerätedaten

## Patentansprüche

1. Verfahren zum mehrstufigen interaktiven Auffinden und Bearbeiten Verwerten von Gerätedaten in einem vernetzten Automatisierungssystem, bei dem vom Nutzer von zentraler Stelle aus per Tastatur (8) in einem graphischen Suchfeld (10) einer Eingabemaske (7) eines Monitors (6) einer Informationsbereitstellungseinheit (5) eine Bezeichnung (11) eines im Kommunikationsnetzwerk (3) des Automatisierungssystems vorhandenen Feldgeräts (2a, 2b) eingegeben wird,
**dadurch gekennzeichnet,**
**dass** durch die Informationsbereitstellungseinheit (5) während der Eingabe der Bezeichnung (11) in das Suchfeld (10) in einer zugeordneten Ergebnisliste (12) passende Trefferbezeichnungen (13) tatsächlich im Automatisierungssystem vorhandener Feldgeräte (2a, 2b) generiert und angezeigt werden, wobei nach Auswahl des gesuchten Feldgeräts (2a) in einem Auswahlschritt bei einem nachfolgenden Verfeinerungsschritt mindestens ein weiteres das ausgewählte Feldgerät (2a) betreffendes ergänzendes Suchkriterium (15) in das Suchfeld (10) oder ein benachbartes Verfeinerungssuchfeld (14) der Eingabemaske (7) eingegeben wird, um nach anschließendem Start der Suche durch den Nutzer die dem ergänzenden Suchkriterium für das gesuchte Feldgerät (2a) entsprechenden Gerätedaten auswählbar anzuzeigen.

2. Verfahren nach Anspruch 1,
**dadurch gekennzeichnet,**
**dass** zur Eingabe des ergänzenden Suchkriteriums (15) in das Suchfeld (10; 14) in einer zugeordneten Ergebnisliste (16) passende Trefferbezeichnungen 17) tatsächlich im Automatisierungssystem vorhandener dem ergänzenden Suchkriterium entsprechender Spezifizierungen generiert und angezeigt werden.

3. Verfahren nach Anspruch 1,
**dadurch gekennzeichnet,**
**dass** die ausgewählte Trefferbezeichnung (17) im Verfeinerungssuchfeld (14) angezeigt wird und dass das ergänzende Suchkriterium (15) in Form eines Suffixes hierzu eingegeben wird.

4. Verfahren nach Anspruch 1,
**dadurch gekennzeichnet,**
**dass** das ergänzende Suchkriterium (15) in einer dem Verfeinerungssuchfeld (14) zugeordneten Ergebnisliste (16) angezeigt wird.

5. Verfahren nach Anspruch 1,
**dadurch gekennzeichnet,**
**dass** die dem ergänzenden Suchkriterium für das gesuchte Feldgerät (2a) entsprechenden Gerätedaten schließlich in Form einer mit den Gerätedaten (21) durch einen Link verknüpften Ergebnisdarstellungsfeld (18) angezeigt werden.

6. Einrichtung zum mehrstufigen interaktiven Auffinden und Verwerten von Gerätedaten in einem vernetztem Automatisierungssystem, mit einer vom Nutzer per Tastatur (8) in einem graphischen Suchfeld (10) einer Eingabemaske (7) eines Monitors (6) einer Informationsbereitstellungseinheit (5) eingebbaren Bezeichnung (11) eines im Kommunikationsnetzwerk (3) des Automatisierungssystems vorhandenen Feldgeräts (2a, 2b),
**dadurch gekennzeichnet,**
**dass** die Informationsbereitstellungseinheit (5) während der Eingabe der Bezeichnung (11) in das Suchfeld (10) in einer zugeordneten Ergebnisliste (12) passende Trefferbezeichnungen (13) tatsächlich im Automatisierungssystem vorhandener Feldgeräte (2a, 2b) generiert und anzeigt, wobei in das Suchfeld (10) oder ein benachbartes Verfeinerungssuchfeld (14) der Eingabemaske (7) mindestens ein weiteres das ausgewählte Feldgerät (2a) betreffendes ergänzendes Suchkriterium (15) eingebbar ist, um nach Start der Suche durch den Nutzer die dem ergänzenden Suchkriterium für das gesuchte Feldgerät (2a) entsprechenden Gerätedaten auswählbar anzuzeigen.

7. Einrichtung nach Anspruch 6,
**dadurch gekennzeichnet,**
**dass** zur Eingabe des ergänzenden Suchkriteriums (15) in das Suchfeld (10; 14) eine dieser zugeordnete Ergebnisliste (16) mit passenden Trefferbezeichnungen (17) tatsächlich im Automatisierungssystem vorhandener dem ergänzenden Suchkriterium entsprechender Spezifizierungen vorgesehen ist.

8. Einrichtung nach Anspruch 6,
**dadurch gekennzeichnet,**
**dass** das Verfeinerungssuchfeld (14) die ausgewählte Bezeichnung (11) anzeigt, und dass das ergänzende Suchkriterium (15) in Form eines Suffix hierzu im Verfeinerungssuchfeld (14) eingebbar ist.

9. Einrichtung nach Anspruch 6,
**dadurch gekennzeichnet,**
**dass** eine dem Verfeinerungssuchfeld (14) zugeordnete Ergebnisliste (16) zur Eingabe des ergänzenden Suchkriteriums (15) vorgesehen ist.

10. Einrichtung nach Anspruch 6,
**dadurch gekennzeichnet,**
**dass** den Gerätedaten (21) in dem Ergebnisdarstellungsfeld (18) jeweils Piktogramme (19; 20) zur visuellen Identifizierung zugeordnet sind.

11. Einrichtung nach Anspruch 10,
**dadurch gekennzeichnet,**
**dass** die Piktogramme (19; 20) den Gerätetyp des Feldgeräts (2a) und/oder das Dateiformat der Gerätedaten (21) darstellen.

12. Computerprogrammprodukt für eine Einrichtung nach einem der Ansprüche 6 bis 11 welche nach einem Verfahren nach einem der Ansprüche 1 bis 5 betreibbar ist, wobei die Routine zum mehrstufigen interaktiven Auffinden von Gerätedaten (21) des Automatisierungssystems durch entsprechende in einer Software hinterlegte Steuerungsbefehle umgesetzt ist.
